# DEMANDE DE BREVET EUROPEEN

(11) **EP 0 974 273 A1**
(43) Date de publication de la demande: **26.01.2000**
(21) Numéro de dépôt: 99440193.3
(22) Date de dépôt: 09.07.1999
(51) Int. Cl.: A23L 1/325, A23L 1/326

(54) **Procédé d'injection d'une suspension de particules de chair de poisson dans des pieces de poisson, notamment du thon.**

(30) Priorité: 24.07.1998 FR 9809587
(71) Demandeur: Saupiquet S.A., 44202 Nantes (FR)
(72) Inventeur: Vouille, Dominique, 44200 Reze (FR); Fouillet, Christine, 44860 Pont Saint Martin (FR); Jacquier, Jean-Louis, 44000 Nantes (FR)
(74) Mandataire: Arbousse-Bastide, Jean-Claude Philippe

(57) **Abrégé**

Il consiste à réduire de la chair de poisson en particules, à incorporer lesdites particules dans un liquide, puis à injecter la solution obtenue dans des pièces de poisson en cours de décongélation, et enfin à réaliser un barattage desdites pièces de poisson.

## Description

La présente invention a pour objet un procédé d'injection d'une suspension de particules de chair de poisson dans des pièces de poisson, notamment du thon.

On connaît déjà, dans le domaine de la salaison, des procédés et des dispositifs d'injection de saumure dans des pièces de viande, notamment des jambons, afin essentiellement d'en maîtriser la coloration et la saveur.

Ces procédés ont été adaptés à l'injection de particules de viande dans des pièces de viande, principalement dans le but d'en augmenter le poids brut. La solution injectée consiste en une suspension comprenant un liquide, généralement de la saumure, une réduction de particules obtenue à partir de morceaux de viande qui généralement ne peuvent pas être commercialisés sous cette forme, et différents additifs.

Ces procédés d'injection sont toutefois réservés au traitement de la viande et ne sont pas applicables au traitement de la chair de poisson.

En effet, l'application à la chair de poisson de ces procédés connus présente le risque de la déstructurer au cours de l'injection et ainsi de dénaturer son aspect en la rendant non commercialisable.

D'autre part, la structure de la chair de poisson exige des conditions particulières d'injection, de manière à obtenir une répartition régulière de la suspension injectée.

On connaît ainsi par le document EP 0 419 080 un procédé de traitement de la viande, qui consiste de manière connue à injecter dans la viande de rognures du même type de viande. Pour optimiser l'injection, ce procédé préconise des conditions particulières de température, ainsi la viande doit être maintenue à une température comprise entre 3° et 9° C, tandis que la suspension à injecter est à une température comprise entre -2° et 0° C.

Ces conditions particulières de température sont adaptées à la viande, par contre, même si le document EP 0 419 080 fait également référence au traitement du poisson, lesdites conditions ne permettent pas d'optimiser l'injection dans du poisson, notamment du thon.

La présente invention a pour but de résoudre le problème ainsi posé en proposant un procédé d'injection de particules de chair de poisson dans des pièces de poisson, notamment du thon.

Le procédé objet de la présente invention se caractérise essentiellement en ce qu'il consiste à réduire de la chair de poisson en particules, puis à incorporer lesdites particules dans une dilution salée, à injecter la suspension obtenue dans des pièces de poisson, et éventuellement à réaliser un barattage desdites pièces de poisson, lesdites pièces de poisson étant, au moment de l'injection, à une température comprise entre -2° et 8°C, tandis que ladite suspension est à une température comprise entre -14° et - 4°C.

Il a en effet été constaté de manière surprenante que la viscosité du mélange chair/dilution salée diminuait avec la température, ce qui permet d'augmenter en proportion la quantité de suspension injectée, et donc d'optimiser la proportion de matière sèche injectée.

Selon une caractéristique additionnelle du procédé selon l'invention, la suspension de particules de chair de poisson est affinée avant l'opération d'injection pour obtenir de particules inférieures à 1 mm.

Selon une autre caractéristique additionnelle du procédé selon l'invention, la suspension est agitée en permanence depuis l'opération d'incorporation des particules dans la dilution salée jusqu'à celle d'injection.

Selon une autre caractéristique additionnelle du procédé selon l'invention, le taux d'humidité de la suspension avant injection est compris entre 85 et 90%.

Selon une autre caractéristique additionnelle du procédé selon l'invention, la suspension présente une concentration en sel de l'ordre de 4 à 8%.

Selon une autre caractéristique additionnelle du procédé selon l'invention, lors de l'incorporation des particules de chair à la dilution salée, cette dernière est à une température de l'ordre de -15 à -4°C.

Selon une autre caractéristique additionnelle du procédé selon l'invention, le barattage est réalisé à une température proche de 0°C en plusieurs cycles comprenant chacun une phase de rotation à faible vitesse et une phase de repos.

Selon une autre caractéristique additionnelle du procédé selon l'invention, le surplus de suspension non injecté est collecté, réfrigéré et agité, avant d'être réintroduit dans le circuit, en amont de l'affinage.

Selon un mode particulier de réalisation du procédé selon l'invention, les particules de poissons sont obtenues par la réduction de copeaux obtenus par grignotage de blocs de poisson congelés.

Les pièces de poisson injectées selon le procédé objet de l'invention peuvent ensuite être traitées de manière traditionnelle.

Le procédé selon l'invention présente un avantage particulier en ce qui concerne le traitement de la chair des thonidés, car il permet de valoriser les déchets de parage et plus particulièrement le muscle rouge des thonidés généralement réservé à l'alimentation animale, notamment sous forme de farine, seul le muscle blanc étant destiné à l'alimentation humaine.

En effet, la consommation du muscle rouge des thonidés par l'homme est actuellement peu courante, en raison notamment de la présence d'éléments qui le rendent peu agréable au plan organoleptique, notamment après cuisson.

Ces défauts ont conduit jusqu'à présent à écarter le muscle rouge de l'alimentation humaine, alors que celui-ci représente une proportion importante de la masse musculaire du thon, 20 % pour l'albacore, et qu'il présente des valeurs nutritionnelles aussi intéressantes que celles du muscle blanc.

Or, la Demanderesse a mis au point un procédé de décoloration du muscle rouge, permettant d'en extraire les éléments qui affectent ses qualités organoleptiques, à savoir les pigments.

Ce procédé de décoloration, décrit dans la demande de brevet européen N° 98440073.9, comporte des phases successives de broyage, de lavage, d'affinage et de décantage, et conduit à l'obtention de particules dites sèches.

Les particules obtenues selon ce procédé peuvent être incorporées à un produit liquide tel qu'une dilution salée, en vue de l'obtention d'une suspension injectable utilisable dans le procédé de l'invention.

Il est également possible de préparer la suspension injectable au moyen de particules issues, en proportions variables, de muscle rouge et de muscle blanc.

Quelle que soit l'origine des particules, blocs de muscle blanc et/ou muscle rouge décoloré ou autre, le procédé selon l'invention présente de nombreux avantages. Il permet une réduction des coûts de production tout en conservant les qualités organoleptiques du produit, voire en les améliorant. En outre, le procédé permet de réduire les rejets de matière organique.

Ainsi, outre son intérêt économique et son aspect écologique, puisqu'il permet de diminuer la charge polluante de rejets lorsque sont utilisés les déchets de parage, le procédé selon l'invention présente un intérêt organoleptique.

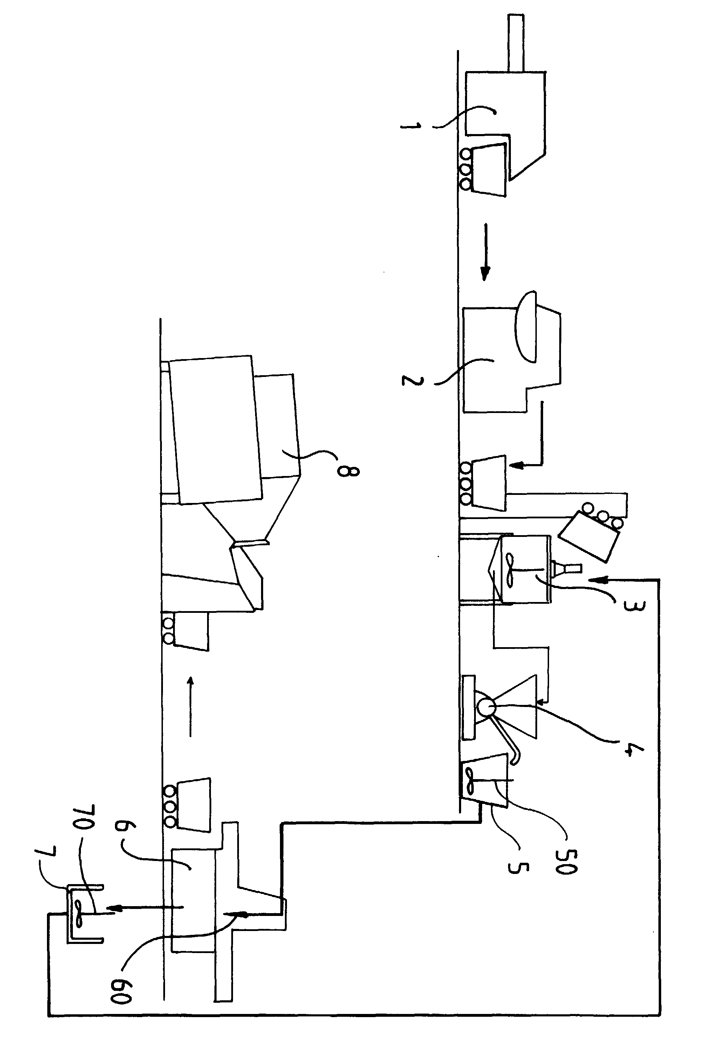

Les avantages et les caractéristiques de la présente invention ressortiront plus clairement de la description qui suit et qui se rapporte au dessin annexé, lequel en représente un mode de réalisation non limitatif.

Dans le dessin annexé, la figure unique représente un schéma illustrant les différentes étapes du procédé selon l'invention.

Si on se réfère à cette figure, on peut voir que la première étape du procédé selon l'invention consiste à réaliser des copeaux de chair dans une grignoteuse 1, à partir de bloc de chair congelés.

Les copeaux sont ensuite transférés dans un appareil 2 équipé de lames permettant de les réduire en particules à l'état de grains assez fins, de l'ordre de 1 à 3 mm.

Puis, les particules sont introduites dans une cuve de pré-mélange 3 où elles sont mélangées à une dilution salée qui est à une température comprise entre -15°C et-4°C, tandis que son taux de sel est ajusté en fonction du taux de sel désiré dans le produit final, en conséquence, le taux de sel de la suspension sera préférentiellement de l'ordre de 4 à 8%.

Lors de cette étape on peut incorporer au liquide des particules issues des opérations de récupération de chair en complément ou en remplacement des particules issues de la réduction des copeaux.

La suspension obtenue passe ensuite dans un affineur 4 afin d'obtenir une suspension homogène sans séparation de phase et ne comportant pas de particules détectables au toucher, de l'ordre de 1 mm.

Par ailleurs, la suspension doit être à une température comprise entre -15° et -4°C, puisque, contre toute attente, il a été constaté que la fluidité de la suspension augmente avec la diminution de la température, la viscosité passant par un minimum en fonction de la diminution de la température. Aussi il convient de maintenir une température négative permanente de l'ensemble.

D'autre part, pour éviter une séparation de phase de la suspension, il est indispensable de maintenir une agitation de celle-ci jusqu'à l'opération d'injection.

La suspension affinée s'écoule ensuite dans une cuve de stockage réfrigérée 5 équipée d'un agitateur 50, d'où elle est transférée à un poste d'injection 6, où des longes ou des blocs de poisson sont injectés au moyen d'aiguilles 60.

Les longes ou les blocs de poissons sont soit du poisson frais, soit du poisson décongelé, dans ce dernier cas les longes ou blocs de poisson ne doivent plus avoir de parties congelées. Préférentiellement, les longes ou les blocs de poisson sont, au moment de l'injection, à une température comprise entre -2° et 8°C.

La température des longes ou des blocs doit de toute façon être supérieure ou égale à -2°C, de préférence-1,5°C, de manière à obtenir un état de texture de la chair pas trop ferme, en particulier exempt de cristaux de glace, pour permettre une diffusion maximum de la suspension lors de l'injection, et ainsi optimiser le taux d'injection.

L'injection peut être réalisée au moyen d'un injecteur multi-aiguilles, équipé d'aiguilles comportant des orifices latéraux afin d'assurer une injection sur toute la hauteur de la pénétration, l'injection étant réalisée pendant les phases de descente et de montée des aiguilles.

Les longes ou les blocs ne présentant pas une face supérieure parfaitement horizontale, certaines aiguilles d'injection ne pénètrent pas totalement dans la chair, ce qui implique qu'une partie de suspension utilisée n'est pas injectée et s'écoule sur les longes ou les blocs, de plus, en raison de la viscosité de la suspension, l'arrêt d'écoulement n'est pas instantané.

Le surplus de suspension est donc récupéré dans une cuve 7 réfrigérée et équipée d'un agitateur 70, puis réintroduit dans le circuit, en amont du poste d'injection 6, et de préférence en amont de l'affineur 4, c'est-à-dire dans la cuve de pré-mélange 3. En effet, la suspension non injectée entraînant de petits lambeaux de chair, il est nécessaire de la faire transiter par l'affineur 4.

L'injection peut être réalisée avec du matériel d'injection existant, en injectant dans des poissons dont la peau n'a pas été enlevée, voire des poissons entiers.

Après l'opération d'injection, les longes ou blocs injectés peuvent être transférés dans une baratte 8 permettant de réaliser une répartition homogène de la suspension injectée.

Le barattage est réalisé en plusieurs cycles constitués chacun d'une rotation à faible vitesse suivie d'une période de repos, et de préférence sous un vide poussé préférentiellement de l'ordre de 0,6 à 0,95b.

Par ailleurs, le barattage doit être réalisé à une température proche de 0°C pour éviter une déstructuration des longes ou blocs de poisson.

Les éléments chiffrés ci-après sont donnés à titre d'exemple non limitatif.
Proportions de la suspension:
   - chair hachée 30,0%
   - eau 12,7%
   - glace 51,2%
   - sel 6,1%
Températures:
   - eau + glace + sel (en fin d'agitation) -9,5°C
   - eau + glace + sel + chair (avant affinage) -5,0°C
   - suspension avant injection -4,2°C
Proportion de suspension injectée et en surface de la longe de thon 26,4%
Analyse de la suspension:
   - humidité 86,4 à 86,6%
   - sel 5,47 à 5,79%

## Revendications

1. Procédé d'injection d'une suspension de particules de chair de poisson dans des pièces de poisson, notamment du thon, caractérisé en ce qu'il consiste à réduire de la chair de poisson en particules, puis à incorporer lesdites particules dans une dilution salée, à injecter la suspension obtenue dans des pièces de poisson, et éventuellement à réaliser un barattage desdites pièces de poisson, lesdites pièces de poisson étant, au moment de l'injection, à une température comprise entre -2° et 8°C, tandis que ladite suspension est à une température comprise entre -14° et - 4°C.

2. Procédé selon la revendication 1, caractérisé en ce que la suspension de particules de chair est affinée avant l'opération d'injection pour obtenir des particules inférieures à 1 mm.

3. Procédé selon la revendication 1 ou la revendication 2, caractérisé en ce que la suspension est agitée en permanence depuis l'opération d'incorporation des particules dans la dilution salée jusqu'à celle d'injection.

4. Procédé selon l'une quelconque des revendications précédentes, caractérisé en ce que le taux d'humidité de la suspension avant injection est compris entre 85 et 90%.

5. Procédé selon l'une quelconque des revendications précédentes, caractérisé en ce que la suspension a une concentration en sel de l'ordre de 4 à 8%.

6. Procédé selon l'une quelconque des revendications précédentes, caractérisé en ce que lors de l'incorporation des particules de chair à la dilution salée, cette dernière est à une température de l'ordre de -15 à-4°C.

7. Procédé selon l'une quelconque des revendications précédentes, caractérisé en ce que le barattage est réalisé à une température proche de 0°C, en plusieurs cycles, qui comprennent chacun une phase de rotation à faible vitesse et une phase de repos.

8. Procédé selon l'une quelconque des revendications précédentes, caractérisé en ce que le barattage est réalisé sous vide poussé, entre 0,6 et 0, 95b.

9. Procédé selon l'une quelconque des revendications 2 à 8, caractérisé en ce que le surplus de suspension non injecté est collecté, réfrigéré et agité, avant d'être réintroduit dans le circuit, en amont de l'affinage.

10. Procédé selon l'une quelconque des revendications précédentes, caractérisé en ce que l'injection est faite dans des poissons dont la peau n'a pas été enlevée, voire des poissons entiers.

11. Procédé selon l'une quelconque des revendications précédentes, caractérisé en ce que les particules de poissons sont obtenues par la réduction de copeaux obtenus par grignotage de blocs de poisson congelés.

12. Procédé selon l'une quelconque des revendications 1 à 10, caractérisé en ce que les particules de poissons sont obtenues par un procédé de décoloration de muscle rouge de thonidés, qui comporte des phases successives de broyage, de lavage, d'affinage et de décantage.
